# EUROPEAN PATENT SPECIFICATION

(11) **EP 4 075 054 B1**
(45) Date of publication and mention of the grant of the patent: **01.11.2023**
(21) Application number: 21168677.9
(22) Date of filing: 15.04.2021
(51) Int. Cl.: F21V 5/00, F21V 5/04, G02B 27/09

(54) **LAMPSHADE MODULE CAPABLE OF REPLACING OPTICAL PROJECTION ELEMENTS**
LAMPENSCHIRMMODUL MIT DER MÖGLICHKEIT ZUM ERSETZEN OPTISCHER PROJEKTIONSELEMENTE
MODULE D'ABAT-JOUR POUVANT REMPLACER DES ÉLÉMENTS DE PROJECTION OPTIQUE

(43) Date of publication of application: 19.10.2022
(73) Proprietor: Smart Electric Works Co.,Ltd., Hsi Hu Chen, Chang Hua Hsien (TW)
(72) Inventor: YANG, JERRY, Taichung (TW)
(74) Representative: 2K Patentanwälte Blasberg Kewitz & Reichel

(56) References cited:
- WO-A1-2013/142437
- CN-B- 104 566 204
- US-A1- 2011 182 065
- US-A1- 2019 331 316

## Description

### BACKGROUND OF THE INVENTION

### (a) Field of the Invention

The present invention relates to lampshade module technology and more particularly to a lampshade module capable of replacing optical projection elements that is to be combined in front of a light-emitting module of a lamp, and has lenses fitted on a lens holder thereof corresponding to the respective light-emitting diodes of the light-emitting module to change the projection angle of the light emitted by the light-emitting module.

### (b) Description of the Prior Art

WO 2013/142437 A1 discloses an improved collimation system for an LED luminaire comprising an array of LEDs; an plurality of primary TIR (Total Internal Reflection) optics which are arrayed to aligning with the LED array where the primary optics include a central light blocks configured in the center of the primary optic an plurality of louvers that align with the primary optics, whereby undesirable light spill is limited and whereby a more constrained light beam is produced.

CN 104 566 204 B discloses a lamp assembly comprising lenses with concentrating and flooding effects for both small angle concentrating and illumination requirements, including:
a concentrating lens comprising a concentrating lens body and a first light source accommodating cavity, wherein the condensing lens body is a truncated cone-shaped type formed by rotating a first curve around an axis of the exiting optical axis of the predetermined concentrating lens, the concentrating The end surface of the light lens body in the necking direction is concavely formed to form the first light source receiving cavity;
a flood lens comprising a flood lens body and a second light source receiving cavity, wherein the flood lens body is a circular-like type formed by rotating a second curve around an axis of the exiting optical axis of the preset flood lens, the pan The end surface of the light lens body in the necking direction is concavely formed to form the second light source receiving cavity.

US 2011/182065 A1 discloses a lighting device with multi-chip solid state light emitters. The lighting device comprises: at least a first multi-chip light emitter and a second multi-chip light emitter, the first multi-chip light emitter comprising at least a first solid state light emitter and a second solid state light emitter, the second multi-chip light emitter comprising at least a third solid state light emitter and a fourth solid state light emitter, the first solid state light emitter emitting light of a first hue, the second solid state light emitter emitting light of a second hue, the third solid state light emitter emitting light of a third hue, the fourth solid state light emitter emitting light of a fourth hue, the first hue differing from the third hue by fewer MacAdam ellipses than the number of MacAdam ellipses by which: the first hue differs from the second hue, the first hue differs from the fourth hue, the second hue differs from the third hue, the second hue differs from the fourth hue, or the third hue differs from the fourth hue, the first solid state light emitter being spatially offset relative to the third solid state light emitter by at least 10 degrees.Further, LED projection light is shown in US Patent No. US6402347B1,which mainly comprises a light-emitting module, which has a plurality of light-emitting diodes (LEDs) in a circular array packaged on a front surface of a substrate thereof. In order to set the light projection angle, an optical lampshade is usually assembled in front of the light-emitting module. The optical lampshade mainly comprises a lens holder made of plastic integral molding. The back of the lens holder is integrally formed with a plurality of protruding lens portions. The center of each lens portion has a light entrance surface, and the light entrance surface direction faces the front light-emitting surface of the lens holder. In this way, the light-emitting diodes of the light-emitting module are respectively aligned with the light entrance surfaces of the lens portions to achieve the function of setting the light projection angle of the lamp.

However, projection lamps have different light projection angle requirements in different applications. For this reason, a variety of optical lampshades must be manufactured. The structure of the lens portions of each optical lampshade is slightly different, and then the optical lampshade with the required angle is selected and assembled in front of the light-emitting module. For example, the first projection lamp is 30°, the second projection lamp is 60°, and so on, so that consumers can choose. However, once the lamp size, shape, light-emitting module structure or the position of the light-emitting diodes is slightly changed, the mold must be reopened to manufacture the corresponding optical lampshade. This small change affects everything, causing the manufacturing cost of many optical lampshades to increase, and the sales channel has to stock many lamps of different projection angles, which will cause inventory pressure. In addition, changing the optical lampshade to a replaceable structure will also cause rainwater to seep into the assembly gap. Therefore, how to eliminate the shortcomings of the conventional optical lampshade is a subject to be actively overcome by the present invention.

Although the Highly efficient LED lamp shown in US Pat. No. US6814470B2 has non-imaging optical elements 16 assembled in the optical module 12, the optical module 12 is provided with a plurality of holes communicating with the LED 14, so it is easy for water to penetrate into the LED 14.

### SUMMARY OF THE INVENTION

The present invention has been accomplished under the circumstances in view. The main object of the present invention is to provide a lampshade module capable of replacing optical projection elements, which can easily provide a lamp with a variety of different light projection angles through the combination structure of a lens holder and a plurality of lenses and, which allows easy replacement of the lens holder or the lenses, thus reducing manufacturing costs and the inventory pressure of the sales channel, while preventing rainwater infiltration.

To achieve this and other objects of the present invention, a lampshade module according to claim 1 is defined. Said lampshade module being capable of replacing optical projection elements is used to combine on a lamp to adjust the light projection angle of light-emitting diodes of a light-emitting module. The lampshade module comprises a lens holder and a plurality of lenses. The lens holder comprises a front surface, an opposing bottom surface, a plurality of lens holes recessed from the front surface toward the bottom surface and at least one first buckle portion located on the hole wall of each lens hole for holding down a lens inserted into the associated lens hole. Each lens hole has a back end corresponding to one respective light-emitting diode of the lamp. The lenses are respectively inserted into the lens holes of the lens holder. The lenses are light-transmitting lenses, each comprising a light entrance surface, a light-emitting surface opposite to the light entrance surface, and at least one second buckle portion formed around the periphery thereof for buckling and fixing on the at least one first buckle portion of the respective lens hole. The lens holder further comprises a plurality of bumps protruding from the bottom surface thereof corresponding to the lens holes, so that the lens holes are respectively recessed into the bumps. The invention is characterized in that the light entrance surface is a convex arc surface protruding in direction toward one respective light-emitting diode. The convex arc surface is used to cause the light of the respective light-emitting diode to enter and project at a light projection angle, wherein each lens further comprises a back end opposite to the light-emitting surface, a groove recessed from the back end in direction toward the light-emitting surface. The light entrance surface is formed at the bottom of the groove, wherein the arcs of the convex arc surfaces of the lenses are different and adapted for generating different light projection angles.

Preferably, the different light projection angles are within the range 5°-120°.

Preferably, the bottom surface of the lens holder is a flat surface for abutting the light-emitting diodes.

Preferably, the lens holder further comprises a plurality of receiving holes recessed from the bottom surface for receiving the light-emitting diodes.

Preferably, one lens hole is a center lens hole located at the center point of the front surface of the lens holder, and the other lens holes are arranged around the center lens hole.

Preferably, each first buckle portion is a protruding buckle portion horizontally protruding from the hole wall of the respective lens hole.

Preferably, each said lens further comprises a tapered arc surface connected between the light entrance surface and the light-emitting surface, and each second buckle portion is a concave buckle portion horizontally recessed from the periphery of the respective tapered arc surface for engagement with one respective protruding buckle portion.

The lampshade module capable of replacing optical projection elements of the present invention can be assembled and applied in front of the light-emitting module of a lamp such as projection lamp, track lamp, garden lamp or wall lamp, so that the light entrance surface of each lens corresponds to one respective light-emitting diode (LED) on the light-emitting module. Through the different arcs of the light entrance surfaces of the lenses, the light projection angle of the lamp is changed. When the manufacture has a specific light projection angle requirement, as long as the lens holder replaces the lenses of the required light projection angle, the lamp of the specific light projection angle can be provided immediately. Moreover, even if the size, shape, structure of the light-emitting module or the position of the light-emitting diodes of the lamp are slightly changed, only a new lens holder needs to be remade, and there is no need to remake the lenses, and the new lens holder can be combined with the existing lenses. Furthermore, the lens holes of the lens holder of the present invention are concave holes for holding the lenses, and rainwater will not penetrate from the lens holes. Therefore, the present invention can easily provide lamps of different light projection angles, allow easy replacement of the lens holder and the lenses, and can reduce manufacturing costs and sales channel inventory pressure, and achieve the effect of waterproof penetration.

### BRIEF DESCRIPTION OF THE DRAWINGS

FIG. 1 is a schematic oblique top elevational view of a lampshade module for use with a lamp in accordance with the present invention.
FIG. 2 is an exploded view of the lampshade module.
FIG. 3 is an oblique bottom elevational view of the lens.
FIG. 4 is a sectional side view of the lens.
FIG. 5 is a sectional bottom elevation of the lens holder in accordance with the first embodiment of the present invention.
FIG. 6 is a schematic side view illustrating the lens holder of the first embodiment of the present invention combined with a light-emitting module.
FIG. 7 is a sectional bottom elevation of the lens holder in accordance with the second embodiment of the present invention.
FIG. 8 is a schematic side view illustrating the lens holder of the second embodiment of the present invention combined with a light-emitting module.

### DETAILED DESCRIPTION OF THE PREFERRED EMBODIMENTS

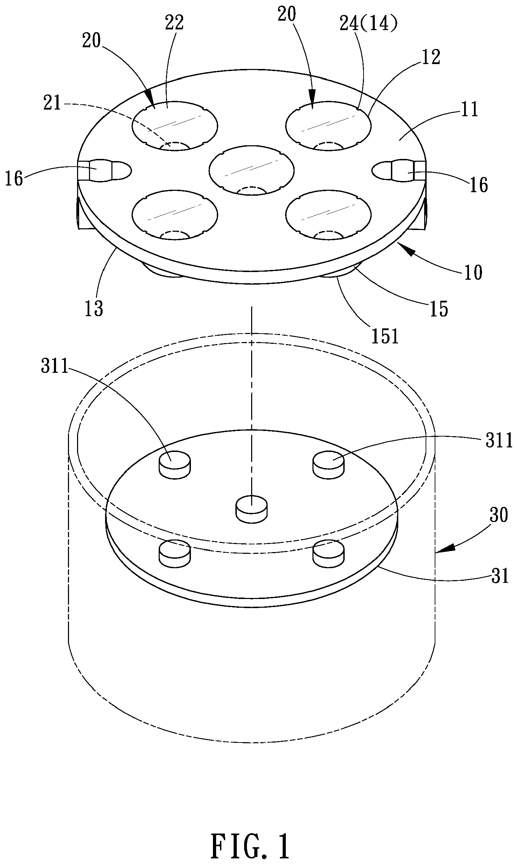

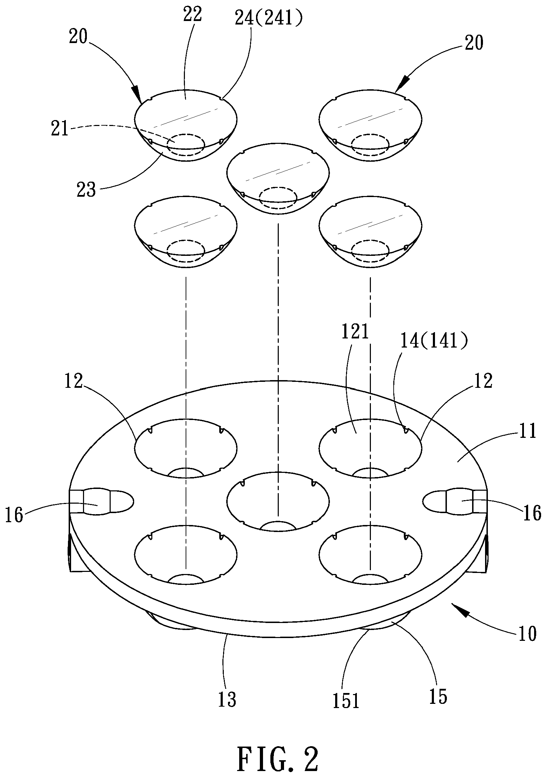

Referring to FIGS. 1 and 2, a lampshade module capable of replacing optical projection elements in accordance with the present invention is shown. The lampshade module comprises a lens holder 10 and a plurality of lenses 20. It is used in combination with a light-emitting module 31 of a lamp 30, and can adjust the light projection angle of the light-emitting diodes 311 of the light-emitting module 31.

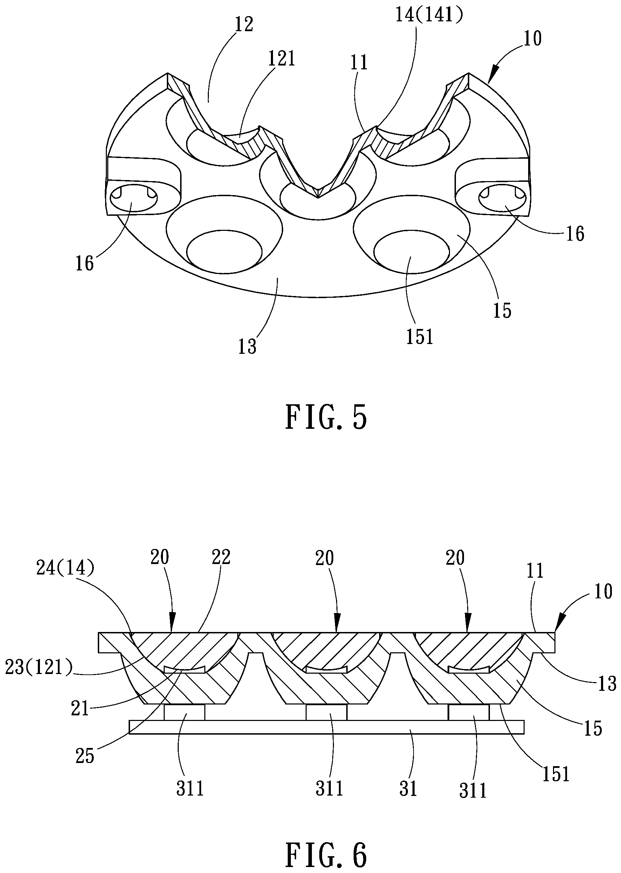

Referring to FIG. 6 and FIG. 2 again, the lens holder 10 is made of one-piece plastic molding and used to cover the light-emitting module 31 of the lamp 30. Its outline can be round, square or other shapes, depending on the shape of the lamp 30. The lens holder 10 has a plurality of lens holes 12 located on a front surface 11 thereof. The lens holes 12 are holes that are recessed from the front surface 11 toward an opposing bottom surface 13 of the lens holder 10, so that the rear end of each lens hole 12 corresponds to one respective light-emitting diode 311 of the lamp 30. The lens holes 12 are preferably implemented as concave holes with an arc-shaped reflective surface 121, so that the lens holes 12 will not penetrate the lens holder 10, so they can also achieve the waterproof function of preventing water from penetrating into the lamp 30. In addition, the hole wall of each lens hole 12 is provided with a plurality of first buckle portions 14, and the first buckle portions 14 are used to buckle the lens 20 inserted into the lens hole 12.

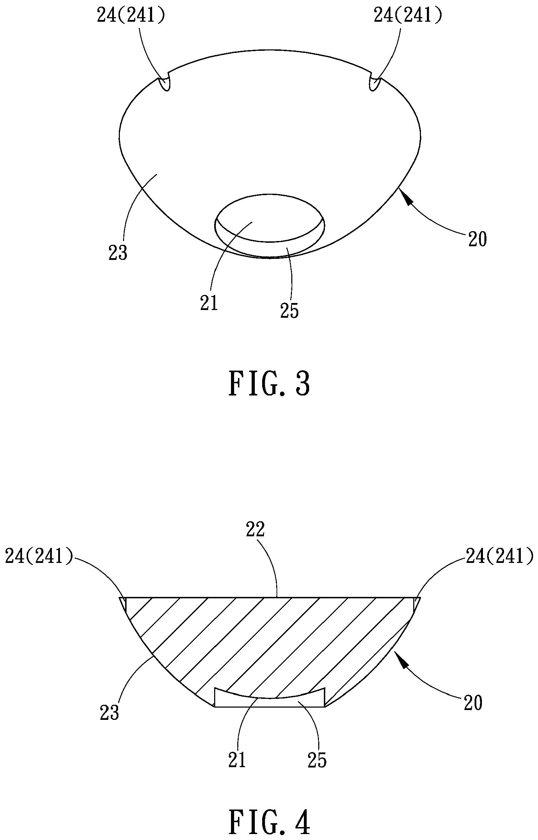

Referring to FIG. 3 and FIG. 4, the lenses 20 are to be inserted into the lens holes 12 respectively. The lenses 20 are preferably implemented as light-transmitting lenses, each comprising a light entrance surface 21, a light-emitting surface 22 opposite to the light entrance surface 21, and a tapered arc surface 23 connected between the light entrance surface 21 and the light-emitting surface 22. The light entrance surface 21 is a convex arc surface protruding toward the light-emitting diode 311, and the convex arc surface is used to cause the light of the light-emitting diode 311 to enter and generate a light projection angle. The light-emitting surface 22 is preferably a flat surface, and can also be implemented as a convex arc surface or a concave arc surface as required to cooperate with the light entrance surface 21 to form a variety of light projection angles. In addition, second buckle portions 24 are formed around the tapered arc surface 23 of the lens 20, and the second buckle portions 24 are used for buckling and fixing to the first buckle portions 14 of the respective lens hole 12.

The lampshade module of the present invention can insert lenses 20 of the corresponding angle in the lens holes 12 of the lens holder 10 according to the order of the specific light projection angle ordered by the manufacturer, that is, replace the lens holder 10 with the lenses 12 of the required angle, and then immediately assemble the lamp 30 to provide a lamp with a specific projection angle. In particular, even if the size, shape, light-emitting module structure or light-emitting diode position of the lamp 30 is slightly changed, only a new lens holder 10 needs to be remade, and no other lenses 20 need to be remade. Other styles of lens holder 10 may be combined with existing lenses 20. Therefore, the present invention can easily provide a lamp with a variety of different light projection angles, and can easily replace the lens holder and the lenses, and can reduce the manufacturing cost.

Referring to FIGS. 3 and 4 again, the lens 20 has a groove 25 recessed from a rear end surface opposite to the light-emitting surface 22 and in direction toward the light-emitting surface 22, and the light entrance surface 21 is formed at the bottom of the groove 25. The arcs of the convex arc surfaces formed by the light entrance surfaces 21 of the lenses 20 are different, and they are used to generate different light projection angles. The light projection angles can be any angle between 5° and 120°.

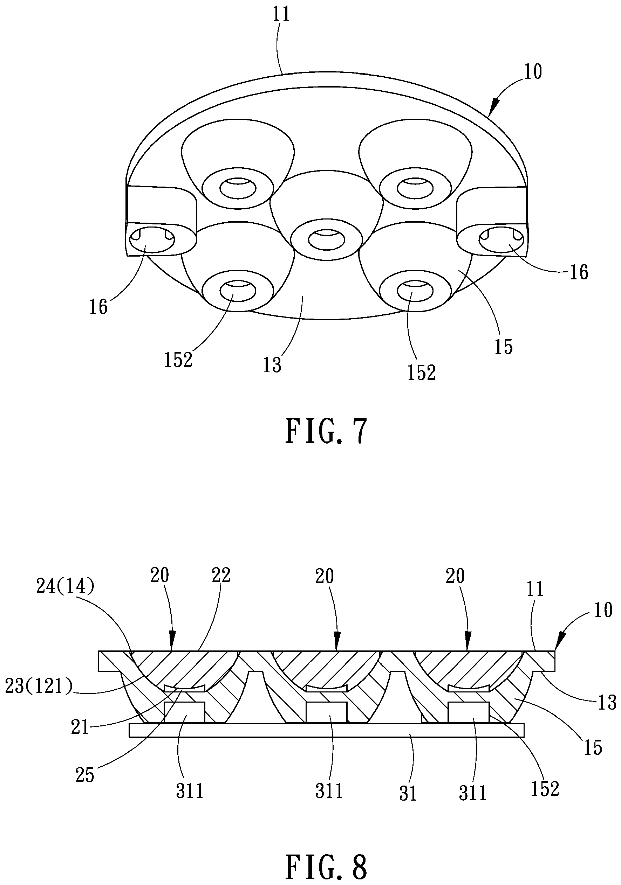

Referring to FIGS. 1 and 2 again, the position and arrangement of the plurality of lens holes 12 of the lens holder 10 are basically unlimited. It is better to implement a lens hole 12 formed at the center point of the front surface of the lens holder 10, and a plurality of lens holes 12 around the center point. As shown in FIG. 5 and FIG. 6, the aforementioned lens holder 10 further comprises a plurality of bumps 15 protruding from the bottom surface thereof corresponding to the lens holes 12, so that the lens holes 12 are respectively recessed into the bumps 15, and the bottom end of each bump 15 is a flat surface 151. The flat surface 151 abuts the respective light-emitting diode 311. As shown in FIG. 7 and FIG. 8, the bottom end of the bump 15 may be recessed with a receiving hole 152 corresponding to the associated lens hole 12, and the receiving hole 152 is used to receive the respective light-emitting diode 311. In addition, the lens holder 10 further comprises two screw mounting portions 16 respectively located at two opposite lateral sides thereof, and the screw mounting portions 16 can be of any structure for the passing of screws to be fixed on the lamp 30.

Referring to FIG. 2 again, the above-mentioned first buckle portions 14 of the lens holder 10 may be protruding buckle portions 141 or other latching structure protruding horizontally from the wall of the lens holes 12. The second buckle portions 24 of the lenses 20 are concave buckle portions 241 that are horizontally recessed from the periphery of the respective tapered arc surfaces 23 or other latch structures that match the first buckle portions 14. Thereby, when the lenses 20 are pushed into the lens holes 12 respectively, the concave buckle portions 241 are clamped or tightly fixed to the respective protruding buckle portions 141, preventing the lenses 20 from being detached from the reverse direction, and achieving easy and convenient assembly into the lens holes.

In summary there is disclosed a lampshade module to be combined on a lamp 30 to change the light projection angle of the lamp 30 includings a lens holder 10 having lens holes 12 and first buckle portions 14 at the hole wall of each lens hole 12 for holding down the inserted lens, and a plurality of lenses 20 each having a light entrance surface 21 corresponding to the bottom end of one respective lens hole 12 and an opposing light-emitting surface 22. The light entrance surface 21 is a convex arc surface, and the arc of the convex arc surface is set according to the light projection angle required. In this way, the lenses 20 with the appropriate projection angles can be selected and assembled in the lens holes 12, and then the lens holder 10 can be assembled in the lamp 30.

Although particular embodiments of the invention have been described in detail for purposes of illustration, various modifications and enhancements may be made without departing from the scope of the invention. Accordingly, the invention is not to be limited except as by the appended claims.

## Claims

1. A lampshade module capable of replacing optical projection elements for combining on a lamp (30) to adjust the light projection angle of light-emitting diodes (311) of a light-emitting module (31), the lampshade module comprising:
a lens holder (10) comprising a front surface, an opposing bottom surface (13), a plurality of lens holes (12) recessed from said front surface toward said bottom surface (13) and at least one first buckle portion (14) located on a hole wall of each said lens hole (12), each said lens hole (12) having a back end corresponding to one respective said light-emitting diode (311) of said lamp (30); and
a plurality of lenses respectively inserted into said lens holes (12) of said lens holder (10), each said lens (20) being a light-transmitting lens, each said lens (20) comprising a light entrance surface (21), a light-emitting surface (22) opposite to said light entrance surface (21) and at least one second buckle portion (24) formed around the periphery thereof, the at least one second buckle portion (24) being for buckling and fixing on said at least one first buckle portion (14) of the respective said lens hole (12) to hold down each lens in the respective said lens hole (12), wherein the aforementioned lens holder (10) further comprises a plurality of bumps (15) protruding from the bottom surface (13) thereof corresponding to the lens holes (12), so that the lens holes (12) are respectively recessed into the bumps (15),
**characterized in that** said light entrance surface (21) being a convex arc surface protruding in direction toward one respective said light-emitting diode (311), said convex arc surface being used to cause the light of the respective said light-emitting diode (311) to enter and project at a light projection angle, wherein each said lens (20) further comprises a back end opposite to said light-emitting surface (22) and a groove (25) recessed from said back end in direction toward said light-emitting surface (22), and the associated said light entrance surface (21) is formed at a bottom of said groove (25), wherein the arcs of said convex arc surfaces of said lenses (20) are different and adapted for projecting light at different light projection angles.

2. The lampshade module as claimed in claim 1, wherein the arcs of said convex arc surfaces of said lenses (20) are different and adapted for projecting light at different light projection angles.

3. The lampshade module as claimed in claim 2, wherein said different light projection angles are within the range 5°-120°.

4. The lampshade module as claimed in claim 1, wherein said different light projection angles are within the range 5°-120°.

5. The lampshade module as claimed in one of claims 1-3, wherein said bottom surface (13) of said lens holder (10) is a flat surface (151) for abutting said light-emitting diodes (311).

6. The lampshade module as claimed in one of claims 1-5, wherein said lens holder (10) further comprises a plurality of receiving holes (152) recessed from said bottom surface (13) for receiving said light-emitting diodes (311).

7. The lampshade module as claimed in claim 5, wherein one said lens hole (12) is a center lens hole located at the center point of said front surface of said lens holder (10), and the other said lens holes (12) are arranged around said center lens hole.

8. The lampshade module as claimed in claim 6, wherein one said lens hole (12) is a center lens hole located at the center point of said front surface of said lens holder (10), and the other said lens holes (12) are arranged around said center lens hole.

9. The lampshade module as claimed in one of claims 1-8, wherein each said first buckle portion (14) is a protruding buckle portion (141) horizontally protruding from the hole wall of the respective said lens hole (12).

10. The lampshade module as claimed in claim 9, wherein each said lens (20) further comprises a tapered arc surface (23) connected between said light entrance surface (21) and said light-emitting surface (22), and each said second buckle portion (24) is a concave buckle portion (241) horizontally recessed from the periphery of the respective said tapered arc surface (23) for engagement with one respective said protruding buckle portion (141).

11. The lampshade module as claimed in one of claims 1-10, wherein said lens holder (10) further comprises a screw mounting portion (16) located at one lateral side thereof for the passing of a screw to be fixed on said lamp (30).

## Patentansprüche

1. Lampenschirmmodul, das beschaffen ist, optische Projektionselemente zum Kombinieren auf einer Lampe (30) zu ersetzen, um den Lichtprojektionswinkel von lichtemittierenden Dioden (311) eines lichtemittierenden Moduls (31) einzustellen, wobei das Lampenschirmmodul umfasst:
einen Linsenhalter (10), der eine vordere Fläche, eine gegenüberliegende untere Fläche (13), eine Vielzahl von Linsenlöchern (12), die von der vorderen Fläche in Richtung der unteren Fläche (13) vertieft sind, und mindestens einen ersten Spangenabschnitt (14) aufweist, der an einer Lochwand jedes Linsenlochs (12) angeordnet ist, wobei jedes Linsenloch (12) ein hinteres Ende aufweist, das zu einer jeweiligen Leuchtdiode (311) der Lampe (30) passt; und
eine Vielzahl von Linsen, die jeweils in die Linsenlöcher (12) des Linsenhalters (10) eingesetzt sind, wobei jede Linse (20) eine lichtdurchlässige Linse ist, wobei jede Linse (20) eine Lichteintrittsfläche (21), eine der Lichteintrittsfläche (21) gegenüberliegende Lichteintrittsfläche (22) und mindestens einen zweiten Spangenabschnitt (24) aufweist, der um ihren Umfang herum ausgebildet ist, wobei der mindestens eine zweite Spangenabschnitt (24) dazu dient, an dem mindestens einen ersten Spangenabschnitt (14) des jeweiligen Linsenlochs (12) eingeknickt und befestigt zu werden, um jede Linse in dem jeweiligen Linsenloch (12) festzuhalten, wobei der zuvor erwähnte Linsenhalter (10) ferner eine Vielzahl von Erhebungen (15) umfasst, die von seiner Bodenfläche (13) entsprechend den Linsenlöchern (12) vorstehen, so dass die Linsenlöcher (12) jeweils in die Erhebungen (15) eingelassen sind, **dadurch gekennzeichnet, dass** die Lichteintrittsfläche (21) eine konvexe Bogenfläche ist, die in Richtung auf eine jeweilige lichtemittierende Diode (311) vorsteht, wobei die konvexe Bogenfläche dazu verwendet wird, das Licht der jeweiligen lichtemittierenden Diode (311) zu veranlassen, in einem Lichtprojektionswinkel einzutreten und zu projizieren, wobei jede der Linsen (20) ferner ein hinteres Ende gegenüber der lichtemittierenden Oberfläche (22) und eine Nut (25) aufweist, die von dem hinteren Ende in Richtung der lichtemittierenden Oberfläche (22) vertieft ist, und die zugehörige Lichteintrittsoberfläche (21) an einem Boden der Nut (25) ausgebildet ist, wobei die Bögen der konvexen Bogenoberflächen der Linsen (20) unterschiedlich sind und zum Projizieren von Licht mit unterschiedlichen Lichtprojektionswinkeln beschaffen sind.

2. Lampenschirmmodul nach Anspruch 1, wobei die Bögen der konvexen Bogenflächen der Linsen (20) unterschiedlich sind und für die Projektion von Licht in unterschiedlichen Lichtprojektionswinkeln beschaffen sind.

3. Lampenschirmmodul nach Anspruch 2, wobei die verschiedenen Lichtprojektionswinkel innerhalb des Bereichs 5°-120° liegen.

4. Lampenschirmmodul nach Anspruch 1, wobei die verschiedenen Lichtprojektionswinkel innerhalb des Bereichs 5°-120° liegen.

5. Lampenschirmmodul nach einem der Ansprüche 1 bis 3, wobei die Unterseite (13) des Linsenhalters (10) eine ebene Fläche (151) ist, an der die Leuchtdioden (311) anliegen.

6. Lampenschirmmodul nach einem der Ansprüche 1 bis 5, wobei der Linsenhalter (10) ferner eine Vielzahl von Aufnahmelöchern (152) aufweist, die von der Bodenfläche (13) ausgenommen sind, um die Leuchtdioden (311) aufzunehmen.

7. Lampenschirmmodul nach Anspruch 5, wobei eines der Linsenlöcher (12) ein zentrales Linsenloch ist, das sich in der Mitte der vorderen Fläche des Linsenhalters (10) befindet, und die anderen Linsenlöcher (12) um das zentrale Linsenloch herum angeordnet sind.

8. Lampenschirmmodul nach Anspruch 6, wobei eines der Linsenlöcher (12) ein zentrales Linsenloch ist, das sich in der Mitte der vorderen Fläche des Linsenhalters (10) befindet, und die anderen Linsenlöcher (12) um das zentrale Linsenloch herum angeordnet sind.

9. Lampenschirmmodul nach einem der Ansprüche 1-8, wobei jeder erste Spangenabschnitt (14) ein vorstehender Spangenabschnitt (141) ist, der horizontal von der Lochwand des jeweiligen Linsenlochs (12) vorsteht.

10. Lampenschirmmodul nach Anspruch 9, wobei jede Linse (20) ferner eine sich verjüngende Bogenfläche (23) umfasst, die zwischen der Lichteintrittsfläche (21) und der Lichtaustrittsfläche (22) verbunden ist, und jeder zweite Knickabschnitt (24) ein konkaver Knickabschnitt (241) ist, der horizontal vom Umfang der jeweiligen sich verjüngenden Bogenfläche (23) für den Eingriff mit einem jeweiligen vorstehenden Knickabschnitt (141) zurückgesetzt ist.

11. Lampenschirmmodul nach einem der Ansprüche 1 bis 10, wobei der Linsenhalter (10) ferner einen Schraubenbefestigungsabschnitt (16) umfasst, der sich an einer Seite desselben befindet, um eine Schraube durchzulassen, die an der Lampe (30) befestigt werden soll.

## Revendications

1. Module d'abat-jour adapté pour remplacer des éléments de projection optique destinés à être combinés sur une lampe (30) pour ajuster l'angle de projection de lumière de diodes électroluminescentes (311) d'un module d'émission de lumière (31), le module d'abat-jour comprenant:
un support de lentille (10) ayant une surface avant, une surface inférieure opposée (13), une pluralité de trous de lentille (12) en retrait de la surface avant vers la surface inférieure (13), et au moins une première partie de pince (14) disposée sur une paroi de trou de chaque trou de lentille (12), chaque trou de lentille (12) ayant une extrémité arrière qui s'adapte à une diode électroluminescente respective (311) de la lampe (30); et
une pluralité de lentilles insérées respectivement dans les trous de lentille (12) du support de lentille (10), chaque lentille (20) étant une lentille transmettant la lumière, chaque lentille (20) ayant une surface d'entrée de lumière (21), une surface d'entrée de lumière (22) opposée à la surface d'entrée de lumière (21) et au moins une seconde partie de pince (24) formée autour de sa périphérie, ladite au moins une seconde partie de pince (24) servant à , être pliée et fixée à la au moins une première partie de pince (14) du trou de lentille respectif (12) pour retenir chaque lentille dans le trou de lentille respectif (12), le support de lentille (10) susmentionné comprenant en outre une pluralité de protubérances (15) faisant saillie de sa surface inférieure (13) correspondant aux trous de lentille (12), de sorte que les trous de lentille (12) sont respectivement encastrés dans les protubérances (15),
**caractérisé en ce que** la surface d'entrée de lumière (21) est une surface d'arc convexe faisant saillie vers une diode électroluminescente respective (311), la surface d'arc convexe étant utilisée pour faire entrer et projeter la lumière de la diode électroluminescente respective (311) selon un angle de projection de lumière, chacune des lentilles (20) ayant en outre une extrémité arrière opposée à la surface électroluminescente (22) et une rainure (25), qui est en retrait de l'extrémité arrière vers la surface d'émission de lumière (22), et la surface d'entrée de lumière associée (21) est formée sur un fond de la rainure (25), dans lequel les arcs des surfaces d'arc convexes des lentilles (20) sont différents et sont adaptés pour projeter de la lumière avec différents angles de projection de lumière.

2. Module d'abat-jour selon la revendication 1, dans lequel les arcs des surfaces d'arc convexes des lentilles (20) sont différents et sont adaptés à la projection de lumière à différents angles de projection de lumière.

3. Module d'abat-jour selon la revendication 2, dans lequel les différents angles de projection de la lumière sont compris dans la plage 5°-120°.

4. Module d'abat-jour selon la revendication 1, dans lequel les différents angles de projection de la lumière sont compris dans la plage 5°-120°.

5. Module d'abat-jour selon l'une des revendications 1 à 3, dans lequel la face inférieure (13) du support de lentille (10) est une surface plane (151) contre laquelle s'appuient les diodes électroluminescentes (311).

6. Module d'abat-jour selon l'une quelconque des revendications 1 à 5, dans lequel le support de lentille (10) comprend en outre une pluralité de trous de réception (152) en retrait de la surface inférieure (13) pour recevoir les diodes électroluminescentes (311).

7. Module d'abat-jour selon la revendication 5, dans lequel l'un des trous de lentille (12) est un trou de lentille central situé au centre de la surface avant du support de lentille (10), et les autres trous de lentille (12) sont disposés autour du trou de lentille central.

8. Module d'abat-jour selon la revendication 6, dans lequel l'un des trous de lentille (12) est un trou de lentille central situé au centre de la surface avant du support de lentille (10), et les autres trous de lentille (12) sont disposés autour du trou de lentille central.

9. Module d'abat-jour selon l'une quelconque des revendications 1 à 8, dans lequel chaque première partie de pince (14) est une partie de pince en saillie (141) qui fait saillie horizontalement à partir de la paroi de trou du trou de lentille respectif (12).

10. Module d'abat-jour selon la revendication 9, dans lequel chaque lentille (20) comprend en outre une surface arquée conique (23) connectée entre la surface d'entrée de lumière (21) et la surface de sortie de lumière (22), et chaque seconde partie de pliage (24) est une partie de pliage concave (241) en retrait horizontalement par rapport à la périphérie de la surface arquée conique respective (23) pour venir en prise avec une partie de pliage en saillie respective (141).

11. Module d'abat-jour selon l'une quelconque des revendications 1 à 10, dans lequel le support de lentille (10) comprend en outre une partie de fixation de vis (16) située sur un côté de celui-ci pour permettre le passage d'une vis destinée à être fixée à la lampe (30).
